# EUROPEAN PATENT APPLICATION

(11) **EP 1 072 343 A1**
(43) Date of publication of application: **31.01.2001**
(21) Application number: 00113536.7
(22) Date of filing: 27.06.2000
(51) Int. Cl.: B23B 5/04, B23B 5/02

(54) **Device for turning of brake disks or the like including an automatic runout compensation unit**

(30) Priority: 30.07.1999 IT VR990037
(71) Applicant: Costruzioni Meccaniche Caorle S.p.A., 36035 Marano Vicentino (IT)
(72) Inventor: Caorle, Alberto, 36035 Marano Vicentino (VI) (IT)
(74) Representative: Savi, Alberto

(57) **Abstract**

This is an automatic runout compensation device for brake disk turning equipment which includes a system able to perform real detection of runout because it employs a direct feeler type of system and does not use an accelerometer device.

The device (1) in question basically consists of support structure (2) where special runout detecting device (3) is installed plus an appliance for elaborating the centering device control signals and special aligning joint (4) powered by motor (5).

Runout detecting device (3) includes a linear movement detector meaning an electronic comparator preferably using LVDT technology or the like, that is firmly fastened to the lathe in a position suitably distant from the rotation axis of aligning joint (4) in order to amplify the effect of the runout.

## Description

This patent proposes a device for turning brake disks that includes an automatic compensation unit that functions to automatically compensate for runout between the lathe applied directly to the vehicle and the brake disk to be turned.

The device according to the innovation has the advantage of being able to use an automatic alignment tool so that the job of turning the brake disks can even be entrusted to personnel without specific preparation or expertise. It also saves time compared to traditional manual systems.

It consists, in other words, of a device that allows totally automatic detecting of runout of the brake disk to be turned and consequently, using a suitable calculator, transforms signals coming from the detector into controls for an electromagnetic actuator that acts on a triad of rotating adjustment devices controlling the distance between the two faces of the alignment device.

As is known the disk brakes used on motor vehicles, subject to substantial friction forces by the brake caliper shoes, undergo wear with the passage of time and periodically require replacement of the shoes and, if necessary, turning of the surface of the disk when the surface is found to be grooved by the shoes beyond admissible maximum values.

It is also known that the surface of the disk, in addition to the formation of grooves caused by shoe friction, is also subject to other forces that cause lateral warping of the disk. These abnormalities must also be detected and corrected during turning procedures since they could jeopardize the safety of the vehicle by generating dangerous vibrations during braking.

At the present time, to detect and correct warping of the disk surface, monitoring devices are used to determine disk runout and to correct disk deformations.

These devices are of various types although recently the sector has seen increasingly widespread use of lathes applied directly to the hub of the vehicle. These avoid the need to remove the brake disk and consequently speed up the entire repair process and also, in addition, perform repair with greater precision.

It is necessary for these devices that the lathe applied to the wheel be subsequently aligned with the axis of the wheel hub because the lathe is mounted on the axle using the wheel hub itself.

However the wheel hub, either because of manufacturing defects or due to the presence of rust that forms at the points where the fastening screws are tightened or due to deformation caused by excessive tightening of the wheel fastening screws, is never perfectly aligned with its own axle and this runout must be corrected in order to turn the brake disk. Known equipment for turning brake disks generally includes a support on which a lathe is mounted, a motor that drives the disk to be turned and an alignment and compensation device. This device may be manual or automatic depending on the model of device.

If the alignment device is the manual type then the machine operator corrects for runout detected by optical or electronic devices by correcting suitable manual adjusters that align the lathe axis with that of the disk in order to perform correct turning.

This system has the problem that the operator who uses it must have a great deal of experience in correcting compensation parameters. As a consequence it is not suited for personnel without special expertise.

In the automatic version correction is no longer done manually but is done using special automatic detection and adjustment devices.

The main problem these devices present is the difficulty they have in correctly detecting runout between the hub and the relative disk.

Several solutions, such as that one relating to patents WO-9810262 and WO-9809754 registered on behalf of WILLEY Joseph, are known that have, for example, runout compensation devices where detection is performed by an accelerometer device which, after a certain number of revolutions, determines misalignment and the relative compensation plane to act on.

This system presents the problem of slowness in display of the amount of runout because the device must perform several revolutions to get in phase and determine the compensation plane even if runout is very small.

The object of this innovation is to achieve an automatic runout compensation device for brake disk turning equipment which includes a system able to perform real detection of runout because it employs a direct feeler type of system and does not use an accelerometer device.

The innovation in question, as part of this general object, proposes use of a system that displays the amount of runout both during realignment and at the end.

The device according to the innovation offers the advantage of reducing alignment times because the aligning joint, since it can be zeroed before application, starts compensating from the very start of rotation unlike the known devices that must dedicate several revolutions to get in phase before they start.

In addition, according to the innovation and thanks to the possibility of zeroing the screws, alignment time becomes proportional to the runout that is detected so that realignment is practically instantaneous in case of small runouts.

Another advantage of the innovation is the fact that no special attention is required when tightening the screws that fasten the lathe to the vehicle's hub. These can be tightened all the way without fear of blocking the alignment mechanism.

The above-mentioned objects and advantages are all achieved, according to the invention, by a device for turning brake disks or the like that includes an automatic runout compensation unit, characterized by the fact that a special runout detecting device, at least one device for elaborating the centering device control signals and a special aligning joint are installed on the support that can be mounted on the hub of the vehicle and by the fact that this runout detecting device is composed of a linear movement detector preferably of the type with an electronic comparator using LVDT technology or the like.

Other characteristics and details of the innovation can be better understood from the following description, given as an example and not limiting, as well as by the attached drawings where:
- fig. 1: illustrates an overall layout of the device for turning brake disks applied directly on the hub of the vehicle;

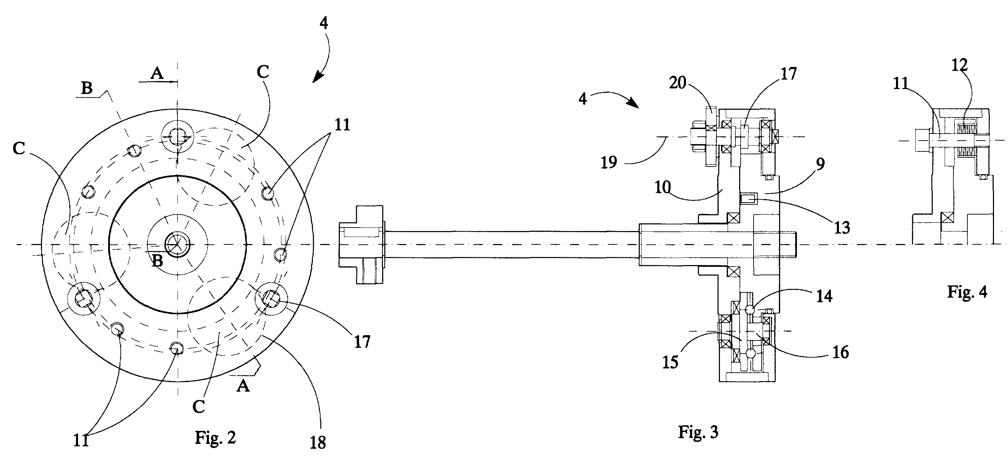

- fig. 2: schematically illustrates an aligning joint according to the innovation and seen from the front;
- fig. 3: illustrates a schematic view of an aligning joint in the innovation seen according to the cutting line of section A-A of figure 2;
- fig. 4: illustrates a schematic view of an aligning joint in the innovation seen according to the cutting line of section B-B in figure 2.

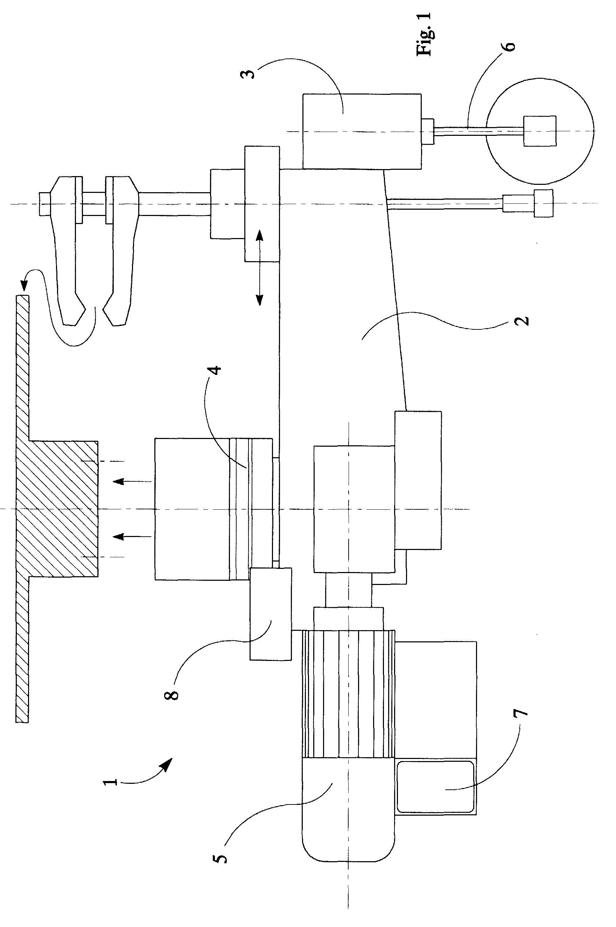

The number 1 is used, with reference to figure 1, to indicate the overall assembly of the device for turning brake disks or the like including an automatic runout compensation unit according to this innovation which device is basically composed of support structure 2 that carries, respectively:
a) a special runout detecting device, indicated by number 3;
b) a device for elaborating the control signals to send to the centering device;
c) a special aligning joint indicated as a whole by the number 4 and driven by motor 5.

The runout detecting device basically consists of a linear movement detector meaning an electronic comparator preferably using LVDT technology or the like, that is firmly fastened to the lathe in a position suitably distant from the rotation axis of aligning joint 4 in order to amplify the effect of the runout.

The detecting device also includes reference element 6 applied each time to the chassis of the vehicle or to another fixed part and that is positioned in contact with the mobile element of the movement detector.

The mobile part of the detector, that consists of a cylindrical cursor, is therefore cyclically moved a distance proportional to the runout during rotation of the lathe axis.

The detector, that also acts as a transducer, transforms the amount of movement into an electrical signal that varies in amplitude and direction depending on the amount and direction of the movement.

The appliance for elaborating the signals and for controlling the centering device consists of a "custom" programmed electronic circuit 7 used to elaborate the signals coming from the detector and to control an electromagnetic type of actuator 8 that acts on a triad of rotary units that adjust the distance between the two faces of alignment device 4.

This device is also furnished with a histogram-type display, made using a row of LEDs or similar devices or a digital-type display that shows the amount of runout while alignment is being performed.

Aligning joint 4 is composed of two flanges 9 and 10 connected one to the axis of the lathe and the other to the vehicle's hub and facing each other through a connection that allows the relative inclinations of the faces to be varied.

This joint is equipped with an electromagnetic type of linear actuator able to act on the devices that vary the relative inclinations of the faces in function of the controls received from the equipment.

More specifically, as illustrated in figures from 2 to 4, the aligning joint consists of two half-joints in the form of flanges 9 and 10 that face each other across three contact points indicated by the letter C and mutually placed at 120° intervals.

The two half-joints are held in mutual adherence by six screws 11 and six sets of Belleville washers 12 whereas drive transmission takes place through stake 13.

Each of the three points of contact C on flange 9 consists of a lead nut 14 the length of which corresponds to a single rotation of a cylindrical propeller of suitable pitch, for example, 0.6 mm, and, on the opposite flange 10, of screw 15 with the same length as lead nut 14.

The screw can rotate around pin 16 applied to flange 10.

When screw 15 is rotated its thread rises or lowers sliding on the thread of lead nut 14.

This creates detachment in case of unscrewing and approach in case of screwing.

A row of suitable diameter balls (for example 5.5 mm) has been inserted between screw and lead nut in order to reduce the friction generated by this maneuver.

Design is such that if all three screws 15 are screwed all the way in the opposite faces of the two flanges 9 and 10 are parallel because the two flanges rest against each other. This zero condition is achieved by the machine operator, using a suitable wrench, before starting the alignment process.

The two faces become inclined with respect to each other by rotating even just one of the three screws 15.

Since these screws are placed at 120° intervals then any relative orientation can be obtained by suitably and variably rotating all three of the screws.

These screws have been demultiplied by a pair of gears (pinion 17 and ring gear 18) to achieve greater precision in rotation of the screws by a force external to the joint. Gear 20 has also been applied to shaft 19 of pinion 17 equipped with a sawtooth extension that can be driven by an external actuator.

It is now easily understood, by the way the relative orientation of the two half-joints can be varied, how this relative orientation can be obtained while the joint is rotating.

In fact it is sufficient for the actuator to enter into the trajectory of a gear in order to obtain variation of the orientation plane.

The desired alignment, thanks to the combined effect of the runout detector and the elaboration and actuator drive equipment, can be achieved in just a few seconds.
We shall now briefly describe an example of operation of the compensation device illustrated above.

The axis is made to rotate by motor 5 once lathe 1 has been mounted on the vehicle's hub and the fixed reference part for sensor 3 has been applied.

The exact moment the sensor detects maximum displacement the actuator automatically intervenes on the adjuster, so to reduce this amount acting on one of the three contact points on flange 9.
In a short time the actuator, acting on all three adjusters, inclines the two flanges of the alignment device relative to each other in order to reach minimum displacement values.

For example displacement values can be considered lower than a real amount of 0.04 mm equal to 0.0016 inch.

As mentioned above the device according to the innovation offers the advantage of reducing alignment times because the aligning joint, which can be zeroed prior to application, starts compensating immediately when it begins to rotate, unlike devices which, because they usually start with a random alignment, need several rotations before they start entering into phase.

Another important advantage of the innovation compared to known solutions is due to the fact that, thanks to the possibility of zeroing the screws, alignment time becomes proportional to the amount of runout that is detected so that realignment is practically immediate for cases of only slight runout.

An expert in the sector can also forecast several modifications and variations to what was described and illustrated as an example, obtaining solutions that are to be held to fall within the area of protection of this invention as defined by the claims.

### TECHNICAL SPECIFICATIONS

The lathe in question employs a microprocessor card to perform automatic alignment between the axis of the lathe and the axis of the wheel.
At start-up the flange of the machine is in rotation together with the brake disk at a frequency equal to the 50 Hz or 60 Hz grid frequency, with automatic measurements made by the control card.
The alignment error, through a linear transfer transducer (composed of a differential transformer (LVDT) and a central core the position of which generates a signal proportional to its position) is converted into a sinusoidal wave with a frequency equal to the rotation frequency of the flange and with amplitude proportional to the amount of error. Since one sinusoidal wave period corresponds to one revolution of the flange (and the disk) there are two key pieces of information that can be measured from this wave: the amount of error and the position of the maximum error within a space of 360 degrees.
Correction is performed by an actuator that acts on one of the three gears spaced at 120 degree intervals and positioned on the flange. The actuator, to be sure to act on at least one of these gears, must be controlled for a time interval equal to a 120 degree rotation of the disk. The duration of this time interval is calculated by the microprocessor based on grid frequency at the start of the correction cycle. This duration remains the same for the entire work cycle.
The choice of which gear to act on is made based on the maximum position of the sinusoidal wave within the period.
During the correction cycle one period is used by the microprocessor to acquire the error sinusoidal wave and the next period is used to make the actual correction by controlling the actuator.
The correction cycle terminates when the amplitude of the sinusoidal wave drops below a certain threshold, preset by software. In reality there are two thresholds: the operator can choose whether to be satisfied by a first correction, always in any case within the tolerances prescribed by the vehicle manufacturers' specifications, or whether to try to achieve a lower threshold, better suited to high speed and sporting vehicles.

## Claims

1. Device for turning brake disks or the like including an automatic runout compensation unit characterized by the fact that the support applied to the vehicle's hub has, installed on it, a special runout detecting device, at least one unit for elaborating the centering device control signals, and a special aligning joint and by the fact that this runout detecting device consists of a linear movement detector or the like.

2. Device for turning brake disks according to the preceding claim, characterized by the fact that this detecting device is preferably composed of an electronic comparator using LVDT technology or the like which is firmly fastened to the lathe in a position suitably distant from the axis of rotation of the aligning joint in order to amplify the effect of runout.

3. Device for turning brake disks, characterized by the fact that this detecting device also includes a reference element applied each time to the vehicle chassis or other fixed part and that is positioned in contact with the mobile element of the movement sensor.

4. Device for turning brake disks characterized by the fact that the equipment for elaborating the signals and the controls for the centering device consists of a "custom" programmed electronic circuit for elaborating the signals coming from the detector and controlling an electromagnetic actuator that acts on a triad of rotating units that adjust the distance between the two faces of the alignment device.

5. Device for turning brake disks characterized by the fact that this elaboration equipment is also furnished with a histogram-type display made using a row of LEDs or similar devices or a digital display that shows the amount of runout while alignment is being performed.

6. Device for turning brake disks characterized by the fact this aligning joint is composed of two flanges connected one to the axis of the lathe and the other to the vehicle's hub and facing each other through a connection that allows the relative inclinations of the faces to be varied.

7. Device for turning brake disks characterized by the fact this joint includes an electromagnetic type linear actuator able to act on the devices that vary the relative inclination of the faces in function of controls received from the equipment.

8. Device for turning brake disks characterized by the fact this aligning joint consists of two half-joints in the form of flanges that face each other across three contact points mutually placed at 120° intervals.

9. Device for turning brake disks characterized by the fact that these two half-joints are held in mutual adherence by screws and sets of Belleville washers whereas drive transmission takes place through a stake or the like.

10. Device for turning brake disks characterized by the fact that each of the three points of contact on this flange consists of a lead nut the length of which corresponds to a single rotation of a cylindrical propeller and, on the opposite flange, by a screw with the same length as the lead nut.

11. Device for turning brake disks according to the preceding claims characterized by the fact that it can be zeroed and consequently, in the case of a hub with zero runout (parallel faces) the consent for turning is given immediately.

12. Device for turning brake disks characterized by the fact that the alignment joint can be zeroed prior to application, achieving a reduction in alignment times because compensation begins immediately upon start of rotation.
